# EUROPEAN PATENT APPLICATION

(11) **EP 3 007 379 A1**
(43) Date of publication of application: **13.04.2016**
(21) Application number: 14187935.3
(22) Date of filing: 07.10.2014
(51) Int. Cl.: H04L 1/00, H04L 1/18, H04W 36/02

(54) **METHOD FOR TRANSMITTING DATA PACKETS FROM A NETWORK NODE USING NETWORK CODING AT HANDOVER**

(71) Applicant: Koninklijke KPN N.V., 2516 CK The Hague (NL); Nederlandse Organisatie voor toegepast- natuurwetenschappelijk onderzoek TNO, 2595 DA 's-Gravenhage (NL); University of Twente, 7500 AE Enschede (NL)
(72) Inventor: Goseling, Jasper, 7512 DV Enschede (NL); Jorguseski, Ljupco, 2282 TR Rijswijk (NL); Zhang, Haibin, 2593 VP The Hague (NL)
(74) Representative: Wuyts, Koenraad Maria

(57) **Abstract**

The disclosure relates to a method for data packet transmission from a network node of a telecommunications network. The method involves transmitting, from the network node, a plurality of data packets onto a first communications path of the telecommunications network, the plurality of data packets comprising a first data packet. At least one network coded data packet is obtained at the network node, wherein the at least one network coded data packet is obtained from network coding of two or more data packets and wherein at least one data packet of the two or more data packets corresponds to the first data packet transmitted onto the first communications path. The obtained at least one network coded data packet is transmitted from the network node onto a second communications path of the telecommunications network.

## Description

### FIELD OF THE INVENTION

The invention relates to a method and network node for transmitting data packets. In particular, the invention relates to a method for data packet transmission from a network node of a telecommunications network using network coding.

### BACKGROUND

Recent developments in 3GPP standardization relate to Long Term Evolution (LTE) and Long Term Evolution Advanced (LTE Advanced) telecommunications networks and user equipments. LTE and LTE Advanced, also known as 4G (i.e. fourth generation) mobile communications standard, is a standard for wireless communication of high-speed data for mobile phones and data terminals. It is a successor of GSM/EDGE (also known as 2G or 2.5G) and UMTS/HSPA (also known as 3G) network technologies, increasing the capacity and speed using a different radio interface together with evolutions and improvements in the radio access network and the core network.

A cellular wireless access telecommunications network provides for handover of user equipment (UE, terminal, mobile station) between cells of one or more base stations in order to allow the UE to move through the cells while maintaining a wireless connection with the telecommunications network. In LTE and LTE Advanced telecommunications networks, a communications path, designated as X2 interface, is provided to enable information exchange and data packet forwarding between a first base station and a second base station. For a handover of a user equipment from the first base station to the second base station, the first base station is referred to as the source base station and the second base station is referred to as the target base station. In LTE and LTE Advanced, a base station is referred to as an evolved Node B, eNodeB or eNB.

Over time, various different cellular technologies have been developed, e.g. GSM/GPRS, cdma, cdma2000, W-CDMA, LTE and LTE Advanced and further generation technologies may be developed or are already under development. Between technologies there may be differences as regards the details on how the desirability of or the need for a handover is determined, on how a handover is initiated and/or on how a handover is performed. For LTE and LTE Advanced handover procedures are defined in 3GPP Technical Specification TS 36.300 'E-UTRA and E-UTRAN; Overall description; Stage 2'.

In LTE, when it is determined that a handover is to be performed, the source eNB transmits, via the X2 interface between the eNBs, a handover request to the target eNB. The source eNB, upon positive confirmation from the target eNB, then transmits a handover command to the UE to perform a handover to the target eNB and interrupts further communication with the UE.

After having sent a handover command to the UE and having interrupted further communication with the UE, the source eNB forwards to the target eNB (e.g. via the X2 interface in LTE/LTE Advanced) all data packets destined for the UE. These data packets may include (i) data packets that the source eNB already transmitted to the UE but for which the source eNB did not ascertain that the UE correctly received them (e.g. when using some form of acknowledged mode of transmission), (ii) data packets destined for the UE that the source eNB already received before the handover command and did not transmit to the UE and (iii) data packets destined for the UE that the source eNB received (and possibly may continue to receive, e.g. until the handover procedure approaches completion) after having sent the handover command.

Because the source eNB forwards all data packets for which the source eNB did not ascertain that the UE correctly received them, whereas it may be that the UE, in fact, correctly received some or possibly all of these data packets, some or possibly all of these data packets are transmitted unnecessarily to the target eNB. In addition, when handover to the target eNB is completed, some or possibly all these data packets may also be transmitted unnecessarily from the target eNB to the UE. For LTE and LTE Advanced, a static window size of 512 is specified in 3GPP TS 36.322 'E-UTRA; Radio Link Control (RLC) protocol specification', Clause 7.2, implying that potentially there may be up to this number of data packets for which the source eNB did not ascertain correct reception by the UE.

US 2011/0019643 discloses a method and apparatus for minimizing data forwarding between eNBs during handover. A User Equipment (UE) sends a status report for RLC PDUs that have suffered a change in status, to an eNB of a source cell immediately before handover occurs, thus preventing RLC PDUs which have been successfully transmitted, but for which ACK signals have not yet been received, from being forwarded to the target cell.

One drawback of the described method is that it relies on communication from the UE to the source eNB to transmit the status report, which communication, in the context of a handover away from the source eNB, may be expected to be or to become unreliable. It, thus, may very well happen that the status report transmitted by the UE is not received correctly by the source eNB. Further, attempts by the UE to re-transmit the status report to the source eNB may be futile when radio conditions have deteriorated to the extent that communication from the UE to the source eNB has become impossible.

There is a need in the art for reducing the amount of data transported over e.g. the X2 interface, preferably in a more reliable manner.

### SUMMARY

To that end, in one aspect, the present disclosure presents a method for data packet transmission from a network node of a telecommunications network. The telecommunications network may comprise a cellular wireless access telecommunications network. The network node may comprise a base station or a network node further upstream of a base station in the access network or in the core network of the telecommunications network, e.g. a Serving Gateway (S-GW).

First, a plurality of data packets is transmitted from the network node onto a first communications path of the telecommunications network. The plurality of data packets comprises at least a first data packet. If the network node is a base station, e.g. an eNB, the first communications path comprises a radio path from the base station to a user equipment (UE). If the network node is a Serving Gateway (S-GW), the first communications path is a path from the S-GW to a base station (e.g. an eNB), e.g. a source eNB.

Next, the network node obtains one or more network coded data packets from network coding two or more data packets. These two or more data packets comprise at least one data packet corresponding to the first data packet transmitted onto the first communications path. Other data packets (transmitted or not yet transmitted by the network node onto the first communications path) may also be used for network coding to obtain the one or more network coded data packets. Obtaining network coded data packets is to be understood as that network coding may be performed by the network node itself or that the network node may outsource the network coding to a unit, function or node external to the network node (e.g. the network node requesting an external unit to have the network coded data packets produced for it and to receive the network coded data packets from the external unit). The external unit may be a virtualised function running on a generic platform.

Performing network coding on two or more data packets involves making a linear combination of the two or more data packets, resulting in a network coded data packet. A single network-coded data packet thus represents a single linear combination of the two or more data packets. Such linear combinations may be created by interpreting a packet as a sequence of symbols from a finite field and taking symbol-wise linear combinations over this finite field. These symbols may be bits, in which case the addition and multiplication over the finite field correspond to the logical XOR and AND operations, respectively. Note that different linear combinations, and thus different network coded data packets, may be made from a same set of the two or more data packets. Also, not that a linear combination of the two or more data packets of a given (same) size may result in a network-coded data packet of that given size. Additional information may also be included to indicate or signal the linear combination made in producing the network coded data packet, resulting in additional (overhead) bits in a network-coded data packet.

Next, the obtained one or more network coded data packets are transmitted onto a second communications path of the telecommunications network. The second communications path may comprise a communications path between two base stations, e.g. in the context of a handover from one (source) base station to another (target) base station, the path being between the source base station and the target base station; in LTE thus crossing the X2 interface between these eNBs. Alternatively, the second communications path may comprise a communications path between a network node in the telecommunications network upstream of a base station and a base station, e.g. in the context of a handover from one eNB to another eNB in LTE, the path between a Serving Gateway (S-GW) and the target eNB.

It is not necessarily the case that all obtained network coded data packets are indeed transmitted. It is also not necessarily the case that all obtained or produced network coded data packets are transmitted immediately; transmission of network coded data packets may, for example, be paced, e.g. network coded data packet by network coded data packet with a transmission pause between subsequent transmissions, or may be transmitted on receiving an indication to do so. The transmission onto the second communications path need not be exclusively in network coded manner (i.e., as network coded data packets); also transmission in non-network-coded manner is envisaged (e.g. as 'conventional' data packets), e.g. in order to also support a more conventional data packet forwarding from e.g. the source eNB to a target eNB.

In this disclosure, a data packet may comprise any block (e.g. an integer number of bits or bytes) of payload data. A data packet typically also has additional overhead (bits or bytes), e.g. header and/or trailer bits, for the purpose of transporting the payload data. Examples of overhead comprise an indication of the data packet and/or payload destination, of a (logical) channel, of a data packet and/or a payload length and/or an error check (e.g. CRC)and/or a sequence number. A data packet in this disclosure thus comprises e.g. an Internet Protocol (IPv4, IPv6) datagram, possibly with additional overhead such as GTP overhead for tunnelling the IP packet through part of the telecommunications network (e.g. from a gateway (S-GW) to a base station (eNB)), an RLC PDU or a Transport Block as e.g. used on a wireless (radio) connection between a base station (eNB) and a user equipment (UE).

Similarly, in this disclosure, a network-coded data packet may be any block (e.g. an integer number of bytes) of network-coded data and the above remarks on data packets equally apply, mutatis mutandis, to network-coded data packets.

Network-coded data packets or data packets transmitted onto the second communications path may be structured differently from or may be structured the same as data packets transmitted onto the first communications path.

Performing network coding on two or more data packets is to be understood as performing network coding on at least the payload data in each of the two or more data packets, and not necessarily on overhead bits or bytes in these data packets.

In another aspect, a network node is disclosed for packet transmission in a telecommunications network. The network node may e.g. comprise a base station (e.g. a source eNB) or a network node further upstream of a base station in the access network or in the core network of the telecommunications network (e.g. a Serving Gateway (S-GW) in LTE).

The network node comprises a first network interface configured for transmitting a plurality of data packets onto a first communications path of the telecommunications network. The plurality of data packets comprises at least a first data packet.

The network node also comprises a second network interface configured for transmitting network coded data packets onto the second communications path.

The first network interface and second network interface may or may not physically coincide.

The network node also comprises means for obtaining at least one network coded data packet, wherein the at least one network coded data packet is obtained from network coding two or more data packets. Again, at least one data packet of the two or more data packets used for network coding corresponds to the first data packet transmitted onto the first communications path. The network node may comprise a network coder or may receive network coded data packets from a unit, function (possibly virtualized) or node external to the network node.

The network node also comprises a controller configured for controlling obtaining the at least one network coded data packet and for transmitting the at least one network coded data packet onto the second communications path.

Other aspects of the disclosure relate to a further network node, receiving the network coded data packet(s) and a telecommunications network comprising the network node and the further network node. Still further aspects relate to a computer program or computer program product and to a user equipment (e.g. a mobile device) for use in the telecommunications network.

The data packets and/or the network coded data packets may be transmitted using some kind of retransmission protocol, e.g. using an acknowledged mode of transmission.

By transferring data packets from the network node over the second communications path to a further network node in a network coded fashion, the amount of transferred data packets and/or network-coded data packets can be reduced and possibly minimised. In the present disclosure, network coding enables avoiding unnecessarily transmitting data packets to a further network node (or further to e.g. a UE). It enables transferring no more than one network coded data packet (transferred over the second communications path) per data packet actually not received or actually received in error over the first communications path, as will become clear from the embodiments described.

For example, in a handover case as described above where, at the moment of interrupting the communication between the source eNB and the UE, the source eNB did not ascertain correct reception by the UE of a number of data packets transmitted by the source eNB to the UE while, actually, the UE correctly received all but one of these data packets transmitted to it by the source eNB (e.g. one of the data packets was not received by the UE or one of the data packets was received in error but the negative acknowledgement indication transmitted by the UE for the data packet received in error was not received by the source eNB and acknowledgement(s) transmitted by the UE for the correctly received data packets (in LTE as e.g. contained in a STATUS message) was/were not received by the source eNB), the source eNB and/or the target eNB only needs to transmit a single network coded data packet that represents a linear combination of all the one or more data packets for which the source eNB did not ascertain that the UE correctly received them.

The UE, after having received this single network coded data packet and using data packet(s) that the UE already received correctly (in this example, of the data packets involved in the linear combination represented in the single network-coded data packet, the UE may use the above-mentioned all but one correctly received data packets), is configured to reconstruct, by applying network decoding, the one data packet it did not receive or did receive in error. A network coded data packet is understood to represent the data packets involved in the linear combination from which the network coded data packet results. The UE may then acknowledge the correct reception of each of the data packets represented in this single network coded data packet. In a handover case, the acknowledgement may be to the target base station. Thus, with the transmission of a single network coded data packet not only the one data packet that the UE did not receive or received in error was transferred to the UE (was effectively retransmitted) but it also enabled the target eNB to ascertain that those data packets for which the source eNB previously did not ascertain that the UE correctly received them, were indeed all transferred to the UE, without actually transmitting (or retransmitting) any of the data packets that were correctly received by the UE. In addition, the source eNB need not have knowledge of which data packet of those data packets for which the source eNB did not ascertain correct reception by the UE, the UE actually did not receive or received in error.

Since the network coded data packets are linear combinations of data packets, the UE needs only one network coded data packet (transmitted via the second communications path and then to the UE) per data packet not received or received in error over the first communications path.

In one disclosed embodiment, the two or more data packets from which the network coded data packet is obtained comprises at least a data packet not transmitted or delivered onto the first communications path to a receiving entity, such as a user equipment or a base station. Such a data packet may e.g. comprise a data packet not transmitted to the UE over the first communications path. Inclusion of such a data packet further improves the transmission efficiency.

In one disclosed embodiment, the network node is a base station of a cellular radio access network and the plurality of data packets is transmitted from the base station to a user equipment over a radio path of the telecommunications network. A handover request may be transmitted or received for the user equipment. E.g. the handover request may be transmitted to a further base station. The network coded data packets may then be transmitted, e.g. following or in response to the handover request, onto the second communications path to the further base station, e.g. in LTE over the X2 interface.

It should be appreciated that the time interval during which data packets are network coded and transmitted onto the second communication path may be determined by fulfilment of one or more conditions. The condition may comprise a handover state of the network node. Another condition may comprise the data packets involved. An example of the former condition is that data packets for a particular UE are network coded from the time the network node becomes involved (e.g. as a source eNB) in a handover procedure for that UE. An example of the latter condition is that data packets are network coded that already have been transmitted onto the first communications path and in particular those data packets for which the network node did not ascertain the correct reception (e.g. an acknowledgement of correct reception has not been received by the network node).

In one disclosed embodiment, the user equipment is handed over from the base station to the further base station. Following handing over of the user equipment to the further base station, one or more network coded data packets obtained from network coding of one or more data packets transmitted onto the radio path for which correct reception could not be ascertained (e.g. an acknowledgment of correct reception has not been received from the user equipment at the base station) are transmitted onto the second communications path from the base station to the further base station.

In one disclosed embodiment, the two or more data packets from which the network coded data packet is obtained comprises at least a data packet corresponding to a data packet for which the network node received a negative acknowledgement indication, indicative of no or errored reception of that data packet at a receiving entity (e.g. a NACK indication). Inclusion of such a data packet further improves the transmission efficiency.

For example, in a handover case as described above where, at the moment of interrupting the communication between the source eNB and the UE, the source eNB did not ascertain correct reception by the UE of a number of data packets transmitted by the source eNB to the UE while, actually, the UE correctly received all these data packets, the source eNB and/or the target eNB only needs to transmit a single network coded data packet that represents a linear combination of all the one or more data packets for which the source eNB did not ascertain that the UE correctly received them and a data packet corresponding to a data packet for which the network node received a negative acknowledgement indication. The UE, after having received this single network coded data packet and using the data packet(s) represented in the network coded data packet that the UE already correctly received, is configured to reconstruct, by applying network decoding, the data packet the UE did not receive or received in error and for which the source eNB received the negative acknowledgement indication.

In order to maximize transmission efficiency, the two or more data packets from which one or more linear combinations are made to obtain one or more network coded data packets may comprise all of the following: (1) all data packets for which the network node did not ascertain correct reception by a receiving entity and (2) at least one data packet corresponding to a data packet for which the network node received an indication of no or erroneous reception has been received and/or a data packet that has not yet been transmitted onto the first communications path.

Further improvement in transmission efficiency may be obtained by having the two or more data packets from which one or more linear combinations are made to obtain one or more network coded data packets include, preferably, all of the following: (1) all data packets for which the network node did not ascertain correct reception by a receiving entity, (2) all data packets corresponding to data packets for which the network node received an indication of no or erroneous reception, (3) one or more data packets not yet transmitted onto the first communications path and (4) one or more data packets for which the network node received, preferably recently, an indication of correct reception at the receiving entity. The latter category of data packets may beneficially be contained in the set of data packets from which network coded data packets are obtained to also account for the possibility of the network node incorrectly interpreting an indication of no or erroneous reception of a data packet on the first communications path as an indication of correct reception of a data packet on the first communications path by a receiving entity, such as a user equipment.

In one disclosed embodiment, the method comprises transmitting a first network coded data packet onto the second communications path and receiving an indication for a second network coded data packet (i.e. a further network coded data packet), optionally, over the second communications path. The second network coded data packet may then be transmitted onto the second communications path in accordance with (e.g. in response to receiving) the indication. This embodiment avoids transmitting more network coded data packets than required. In particular, the indication may indicate a number of network coded data packets to be transmitted from the network node onto the second communications path.

For example, in a handover case as described above where, at the moment of interrupting the communication between the source eNB and the UE, the source eNB did not ascertain correct reception by the UE of a number of data packets transmitted by the source eNB to the UE while, actually, the UE correctly received all but two of these data packets transmitted to it by the source eNB, but the source eNB did not ascertain this to be the case (e.g. data packet(s) were not received by the UE or data packet(s) were received in error but the negative acknowledgement indication transmitted by the UE for the data packet(s) received in error was not received by the source eNB and acknowledgement(s) transmitted by the UE for the correctly received data packets (in LTE as e.g. contained in a STATUS message) was/were not received by the source eNB), the source eNB and/or the target eNB initially transmits a single network coded data packet that represents a linear combination of all the one or more data packets for which the source eNB did not ascertain that the UE correctly received them. The UE, after having received this initial single network coded data packet and using the all but two data packet(s) represented in the network coded data packet that the UE already received correctly, is unable to reconstruct, by applying network decoding, from the single linear combination represented in the initial network-coded data packet the two data packets it did not receive or did receive in error. Then, the UE may indicate, to the target base station, how many additional linear combinations (i.e. how many additional network coded data packets) it needs to reconstruct each of the 'unknown' data packets (not received or received in error) from the linear combinations represented in the network coded data packets (in this example e.g. one additional network coded data packet). The UE, after having received the further network coded data packet, and using the all but two data packet(s) represented in the network coded data packet that the UE already received correctly, is configured to reconstruct, by applying network decoding, the two 'unknown' data packets (not received or received in error). The UE may then acknowledge, in a handover case e.g. to the target base station, the correct reception of each of the data packets represented in the two network-coded data packets. Thus, with the transmission of two network-coded data packets only the two data packets not received or received in error were transferred to the UE (effectively retransmitted), without actually transmitting (or retransmitting) any of the data packets that were received correctly by the UE. Again, as indicated previously, the source eNB need not have knowledge of which data packet(s) of those data packets for which the source eNB did not ascertain correct reception by the UE, the UE actually did not receive or received in error.

In a still further embodiment, the method may comprise transmitting one or more network coded data packets onto the second communications path until an indication to terminate transmitting network coded data packets is received. This enables a multiplicity of network coded data packets to be transmitted until a termination condition is satisfied at a further network node. The termination condition may be triggered by the further network node receiving an indication, e.g. from a UE, that further network coded data packets are not required. In this embodiment, the further network node (e.g. the target eNB) needs not (repeatedly) indicate, e.g. after receipt of each network coded data packet, the need for one or more additional network-coded data packets, but may only transmit an indication signalling that transmission of network coded data packets onto the second communications path can be terminated. Terminating transmission of network-coded data packets may also comprise transmission of further data packets in a non-network-coded manner onto the second communications path of the telecommunications network.

In yet another disclosed embodiment, the network node may transmit further data packets. The further data packets may be received e.g. by a base station (e.g. from an S-GW) or by an S-GW (e.g. from an P-GW) over the telecommunications network. The further data packets may be data packets received by the network node but not transmitted onto the first communications path (and thus not received by e.g. the UE). Such data packets may be transmitted onto the second communications path in a non-network coded manner, since network coding would not bring any advantage.

In another embodiment, network coding coefficients may be provided to an entity receiving the one or more network coded data packets prior to transmitting the obtained one or more network coded data packets onto a second communications path of the telecommunications network. Since the network coded data packets are simply forwarded to the UE, coding coefficients can be chosen ahead of time and made available to the network node and the UE. In this case, overhead for signalling coding coefficients is saved.

As will be appreciated by one skilled in the art, aspects of the present invention may be embodied as a system, method or computer program product. Accordingly, aspects of the present invention may take the form of an entirely hardware embodiment, a software embodiment (including firmware, resident software, micro-code, etc.) or an embodiment combining software and hardware aspects that may all generally be referred to herein as a "circuit," "module" or "system". Functions described in this disclosure may be implemented as an algorithm executed by a microprocessor of a computer. Furthermore, aspects of the present invention may take the form of a computer program product embodied in one or more computer readable medium(s) having computer readable program code embodied, e.g., stored, thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a solid-state drive, a random access memory (RAM), a non-volatile memory device, a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this disclosure, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless (using electromagnetic and/or optical radiation), wired, optical fiber, cable, etc., or any suitable combination of the foregoing. Computer program code for carrying out operations for aspects of the present invention may be written in any combination of one or more programming languages, including an object oriented programming language such as Java(TM), Smalltalk, C++ or the like and conventional procedural programming languages, such as the "C" programming language or similar programming languages. The program code may execute entirely on a user's computer, partly on the user's computer, as a stand-alone software package, partly on the user's computer and partly on a remote computer, or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described below with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor, in particular a microprocessor or central processing unit (CPU), of a general purpose computer, special purpose computer, or other programmable data processing apparatus to produce a machine, such that the instructions, which execute via the processor of the computer, other programmable data processing apparatus, or other devices create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

The flowchart and block diagrams in the figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the functions noted in the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

It is noted that the invention relates to all possible combinations of features recited in the claims.

### BRIEF DESCRIPTION OF THE DRAWINGS

Aspects of the invention will be explained in greater detail by reference to exemplary embodiments shown in the drawings, in which:
Fig. 1 is a schematic illustration of three generations of telecommunications networks;
Figs. 2A and 2B depict a portion of a telecommunications network according to a disclosed embodiment and a flow chart illustrating an embodiment of the disclosed method;
Figs. 3A-3C depict time diagrams of a prior art handover method (Fig. 3A) and embodiments of handover methods disclosed herein (Figs. 3B and 3C);
Fig. 4 depicts an embodiment of a time diagram for embedding the disclosed method of packet transmission in a handover procedure; and
Fig. 5 is a schematic block diagram of a general system or node of a telecommunications network or a user device.

### DETAILED DESCRIPTION OF THE DRAWINGS

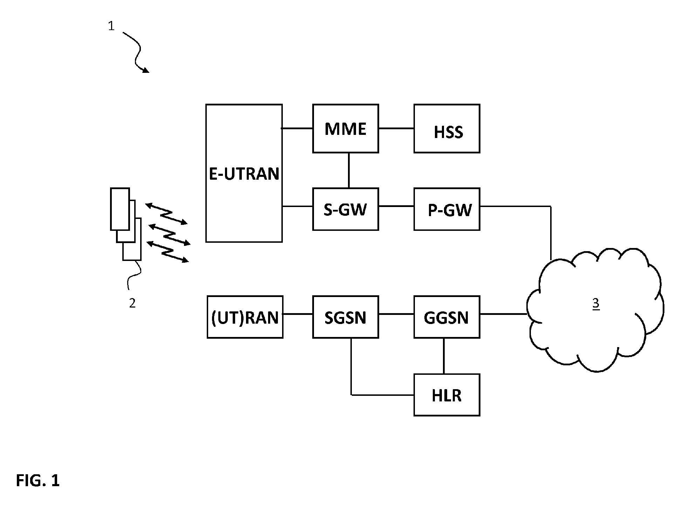

FIG. 1 shows a schematic illustration of a telecommunications system 1. The telecommunications system 1 comprises a cellular radio access network system (also indicated as E-UTRAN or (UT)RAN in Fig. 1) and a core network system containing various elements or nodes as described in further detail below.

In the telecommunications system of FIG. 1, three generations of networks are schematically depicted together for purposes of brevity. A more detailed description of the architecture and overview can be found in 3GPP Technical Specification TS 23.002 'Network architecture' which is included in the present application by reference in its entirety.

The lower branch of FIG. 1 represents a GSM/GPRS or UMTS network.

For a GSM/GPRS network, a radio access network (RAN) system comprises a plurality of nodes, including base stations (combination of a Base Station Controller (BSC) and a Base Transceiver Station (BTS)), not shown individually in FIG. 1.

For a UMTS radio access network (UTRAN), the radio access network system comprises a plurality of nodes, including base stations (NodeBs) and one or more Radio Network Controllers (RNCs) each connected to a plurality of NodeBs, also not shown individually in FIG. 1. A GSM/GPRS and a UMTS core network system may be integrated with each other and comprises a Gateway GPRS Support Node (GGSN), one or more Serving GPRS Support Nodes (SGSN) and a Home Location Register (HLR). The UTRAN is connected to an SGSN. Similarly, an SGSN is connected to a GGSN. A HLR contains subscription information associated with the user devices 2, e.g. a terminal, also referred to as user equipment (UE) or mobile station (MS).

The upper branch of the telecommunications system in FIG. 1 represents a next generation network, commonly indicated as Long Term Evolution (LTE) system or Evolved Packet System (EPS).

For an LTE radio access network system, indicated as E-UTRAN, the radio access network system includes base stations termed evolved NodeBs (eNodeBs or eNBs), not shown individually in FIG. 1, providing cellular wireless access for a user device 2. The LTE core network system comprises a PDN Gateway (P-GW) and one or more Serving Gateways (S-GW). The E-UTRAN of the EPS is connected to the S-GW via a packet network. The S-GW is connected to a Home Subscriber Server HSS and a Mobility Management Entity MME for signalling purposes. The HSS includes a subscription profile repository for user devices 2.

For GPRS, UMTS and LTE systems, the core network system is generally connected to a further packet network 3, e.g. the internet.

Further information of the general architecture of a EPS network can be found in 3GPP Technical Specification TS 23.401 'GPRS enhancements for E-UTRAN access'.

In the present disclosure, user devices 2 are referred to as user equipment UE 2. These devices comprise any type of communication device, preferably mobile communication device, configured for wireless access to the telecommunications network 1.

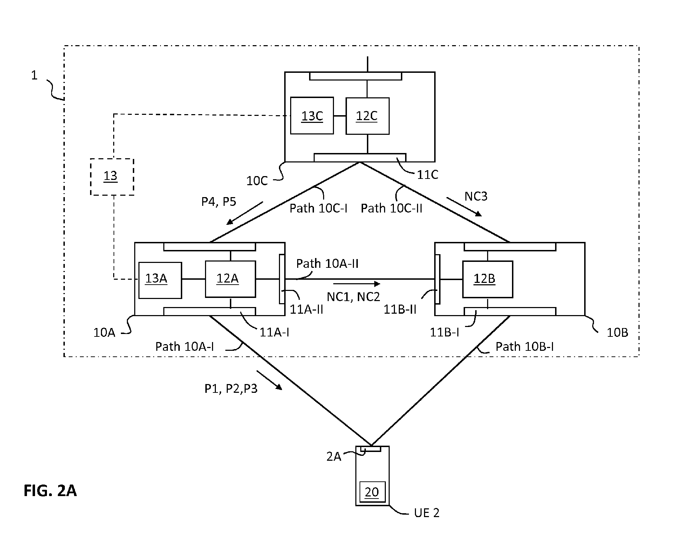

FIG. 2A is a schematic illustration of a portion of a cellar wireless telecommunications system 1 comprising a plurality of network nodes 10A-10C. In one embodiment, network nodes 10A, 10B comprise network nodes providing cellular wireless access by a UE 2 to the telecommunications system 1. Examples of such network nodes include base stations, such as NodeBs or eNBs. The network nodes 10A, 10B are configured to communicate with the UE 2 over separate radio paths, path 10A-I and path 10B-I, respectively. Network node 10C is a network node in the telecommunications system 1 upstream of the network nodes 10A, 10B providing data packets, to be delivered at the UE 2, to these network nodes 10A, 10B over (commonly but not necessarily wired) paths, path 10C-I and path 10C-II, respectively. An example of such a network node 10C includes a gateway, such as an S-GW in an LTE telecommunications system (see FIG. 1). Network node 10C may receive data packets from other entities within or outside of the telecommunications system 1, e.g. from the P-GW.

Network nodes 10A and 10B are connected via a further path, path 10A-II. If network nodes 10A, 10B are eNBs, this path 10A-II is enabled by the X2 interface between eNBs.

The paths in FIG. 2A may enable bi-directional communication.

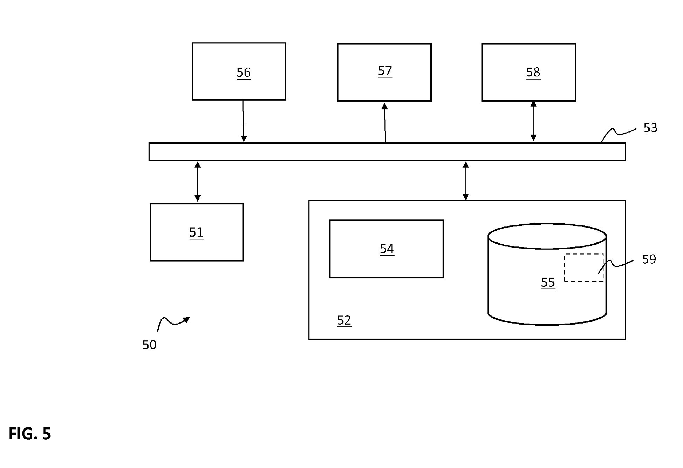

In FIG. 2A, the three network nodes 10A-10C are drawn to implement two embodiments of the present disclosure. Network nodes 10A-10C comprise computer systems of which a more general representation is provided in FIG. 5.

Network node 10A comprises a first interface 11A-I to communicate over radio path 10A-I with the UE 2 and a second interface 11A-II to communicate over path 10A-II with network node 10B. Network node 10A receives data packets, to be delivered at UE 2, from network node 10C over path 10C-I.

Network node 10A also comprises a control system 12A that is in communicative connection with a network coding entity 13A. Control system 12A controls operation of the network node 10A, including transmission of data packets and network coded data packets. Although network coding entity 13A is drawn integrated in network node 10A, network coding functionality may be provided externally from the network node 10A (see the dashed box 13 in FIG. 2A; note that the network coding functionality may or may not be part of the telecommunications system 1)possibly as a so-called virtualised network function running on a generic platform.

Network coding involves making a linear combination of two or more data packets P1, P2, P3 (e.g. via a bit-wise XOR operation of the two or more data packets), resulting in a network coded data packet NC1. A single network-coded data packet thus represents a single linear combination of the two or more data packets. Note that different linear combinations, and thus different network coded data packets (in this case NC1 and NC2), may be made from a same set of the two or more data packets {P1, P2, P3}. Also, note that a linear combination of the two or more data packets of a given (same) size may result in a network-coded data packet of that given size. Additional information may be included to indicate or signal the linear combination made in producing the network coded data packet, resulting in additional (overhead) bits in a network-coded data packet.

Network node 10B comprises a first interface 11B-I to communicate over radio path 10B-I with the UE 2 and a second interface 11B-II to communicate over path 10A-II with network node 10A. Network node 10B also comprises a control system 12B controlling operation of the network node 10B, including e.g. transmission of network coded data packets NC1, NC2.

Network node 10C comprises an interface 11C for communicating further data packets P4, P5 and network coded data packets NC3 over paths 10C-1 and 10C-II respectively. Network node 10C is provided with a control system 12C for controlling operation of the network node 10C, including e.g. transmission of data packets and network coded data packets. In order to obtain network coded data packets, network node 10C may be provided with a network coding entity 13C or may have outsourced the network coding functionality to an external entity 13.

The UE 2 comprises an interface 2A and a processor system 20. The interface 2A may be configured for receiving the plurality of data packets P1, P2, P3 transmitted on the radio path 10A-I from the network node 10A and for receiving the at least one network coded data packet NC1, NC2 from the further network node 10B over the radio path 10B-I. Note that the radio path 10A-I and the radio path 10B-I need not exist at the same time; e.g. first data packets P1, P2, P3 may be transmitted on the radio path 10A-I and communication on the radio path 10A-I may be interrupted or terminated, while at least one network coded data packet NC1, NC2 may be transmitted from the further network node 10B on the radio path 10B-I after the radio path 10B-I has been established. The radio path 10A-I may thus comprise a radio path between the UE 2 and the network node 10A before and the radio path 10B-I may comprise a radio path between the UE2 and the network node 10B after handover of UE2 from the network node 10A (e.g. source eNB) to the network node 10B (e.g. target eNB).

The processor system 20 is configured for switching the receiving interface 2A from receiving (e.g. data packets P1, P2, P3) on the radio path 10A-I to subsequently receiving (e.g. network-coded data packets NC1, NC2)on the radio path 10B-I. The processor system 20 is further configured for decoding the at least one network coded data packet NC1, NC2 received on the radio path 10B-I using at least the first data packet P1 received from the network node 10A on the radio path 10A-I. The interface 2A may also be configured for transmitting information to the network node 10B indicative of whether or not and/or the number of network coded data packets required for decoding the at least one network coded data packet.

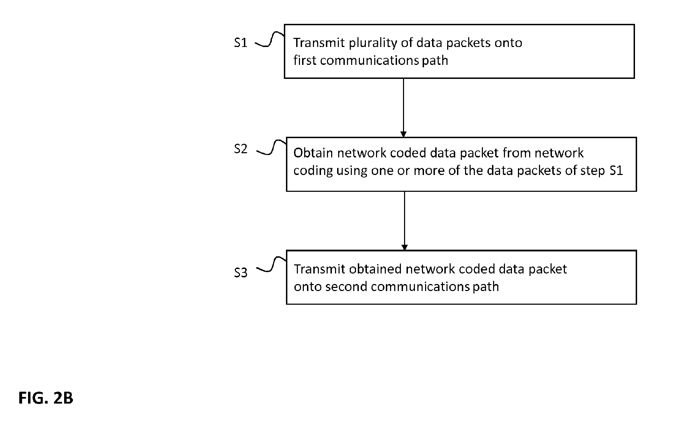

Two operational embodiments for the system of FIG. 2A will now be described with reference to FIG. 2B.

In a first disclosed embodiment, in step S1, a plurality of data packets P1, P2, P3 is transmitted from the network node 10A onto a first communications path 10A-I of the telecommunications network 1. Network node 10A may be a source eNB. In this embodiment, the first communications path 10A-I refers to a wireless (e.g. radio) communications path between a base station (e.g. an eNB) and the user device UE 2, e.g. in the context of a handover in LTE from a source eNB to a target eNB, the path between the source eNB and the UE 2. The plurality of datapackets comprises a fist data packet, e.g. data packet P1 or P2 or P3.

Next, in step S2, the network node 10A obtains one or more network coded data packets from network coding of two or more data packets P1, P2, P3. These two or more data packets P1, P2, P3 comprise at least one data packet corresponding to the first data packet transmitted onto the first communications path 10A-I. In the embodiment of FIG. 2A, all data packets P1, P2, P3 that have been transmitted onto the first communication path 10A-I are used for obtaining the one or more network coded data packets. Other data packets P4, P5 received by the network node 10A but (e.g. at the moment of handover)not (yet) transmitted by the network node 10A onto the first communications path 10A-I may also be used for network coding to obtain the one or more network coded data packets.

Network coding may be performed by network coding entity 13A. Performing network coding on data packets P1, P2, P3 involves making a linear combination of these data packets, e.g. by a bit-wise XOR operation, of the bits of these data packets resulting in network coded data packet NC1 and NC2.

Next, in step S3, the network node 10A transmits the obtained network coded data packets NC1, NC2 onto a second communications path 10A-II of the telecommunications network 1. In this embodiment, the second communications path 10A-II may comprise a communications path between two base stations, e.g. in the context of a handover in LTE the path from a source eNB 10A to a target eNB 10B, thus crossing the X2 interface between these eNBs.

In a second disclosed embodiment, in step S1, a plurality of data packets P4, P5 is transmitted from the network node 10C onto a first communications path 10C-I of the telecommunications network 1. The plurality of data packets comprises a first data packet, e.g. data packet P4 or P5. Network node 10C may be a Serving Gateway S-GW. In this embodiment, the first communications path 10C-I refers to a communications path between a network node in the telecommunications network upstream of a base station (e.g. an S-GW) and the base station, e.g. in the context of a handover in LTE from a source eNB to a target eNB, the path between an S-GW and the source eNB.

Next, in step S2, the network node 10C obtains one or more network coded data packets from network coding of two or more data packets P4, P5. These two or more data packets P4, P5 comprise at least one data packet corresponding to the first data packet transmitted onto the first communications path 10C-I. In the embodiment of FIG. 2A, all data packets P4, P5 that have been transmitted onto the first communications path 10C-I are used for obtaining the one or more network coded data packets.

Network coding may be performed by network coding entity 13C. Performing network coding on data packets P4, P5 involves making a linear combination of these data packets, e.g. by a bit-wise XOR operation of the bits of these data packets resulting in a network coded data packet NC3.

Next, in step S3, the network node 10C transmits the obtained network coded data packet NC3 onto a second communications path 10C-II of the telecommunications network 1. In this embodiment, the second communications path 10C-II refers to a communications path between a network node in the telecommunications network upstream of a base station (e.g. an S-GW) and the base station, e.g. in the context of a handover in LTE from a source eNB to a target eNB, the path between an S-GW and the target eNB.

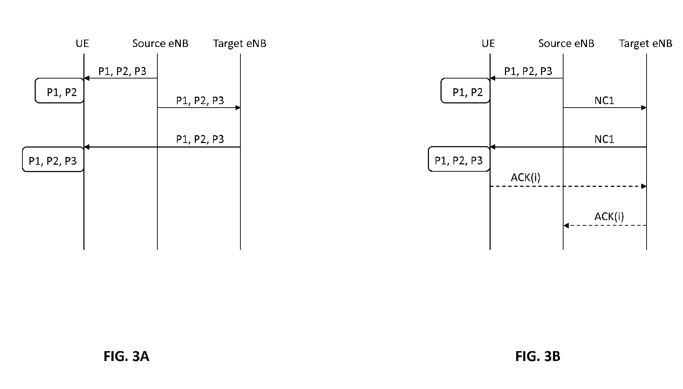

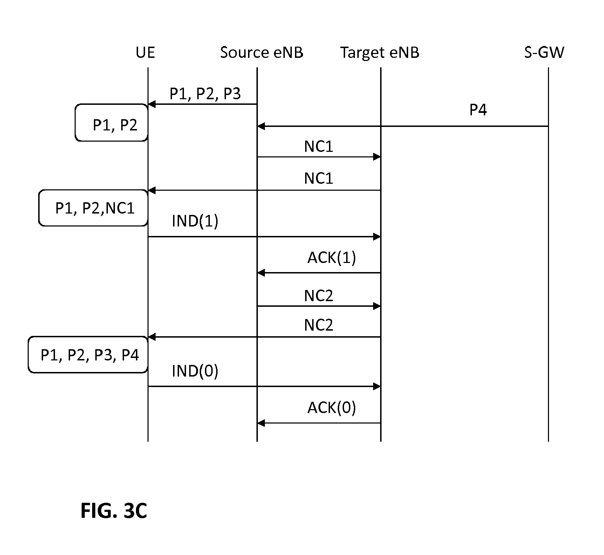

Figs. 3A-3C depict time diagrams of a prior art handover method (Fig. 3A) and embodiments of handover methods disclosed herein (Figs. 3B and 3C). The source eNB corresponds to network node 10A and the target eNB to network node 10B in FIG. 2A.

In the prior art time diagram of Fig. 3A, data packets P1, P2, P3 are transmitted from the source eNB to the UE. It is assumed that data packets P1, P2 have been received correctly, while data packet P3 has not been received or has been received with errors (i.e. not correctly) by the UE. However, the source eNB is not aware that any of the data packets have been correctly received by the UE, e.g. by failing to have received a positive acknowledgement ACK for any of these data packets. If the UE is to be handed over from the source eNB to the target eNB, the conventional approach is that all data packets for which the source eNB has not ascertained that these have been received correctly (here data packets P1, P2 and P3) are forwarded from the source eNB to the target eNB. After handover to the target eNB has been completed, the target eNB, in the conventional approach, transmits the received data packets P1, P2 and P3 to the UE, although data packets P1, P2 were already received correctly by the UE. This approach is inefficient.

A fundamentally different approach is shown in the time diagram of FIG. 3B. Again, it is assumed that only data packet P3 is either not received or received with errors by the UE, but the source eNB is not aware of the receipt status of any of the data packets P1, P2 and P3. Instead of forwarding all these data packets to the target eNB, the source eNB obtains at least one network coded data packet NC1 from network coding one or more data packets for which correct receipt has not been ascertained. The network coded data packet NC1 is a linear combination of these data packets, e.g. NC1 = P1 + P2 + P3 (wherein the + symbols represent a bit-wise operation on the bits of at least the payload of the data packets). The network coded data packet may therefore be of the same size as a single data packet (or slightly larger if additional information, such as the coding coefficients, is added to the network coded data packet, thus forming overhead). The transmission of only the network coded data packet NC1 (as opposed to the transmission of data packets P1, P2 and P3 as in FIG. 3A) to the target eNB over the second communications path therefore improves the data transmission efficiency on the path between the source eNB and the target eNB (the second communications path) and also on the radio path between the target eNB and the UE. Determining the data packets to be used for network coding and/or transmission of the network coded data packet(s) NC1 is under the control of a controller in the source eNB, e.g. controller 12A shown schematically in FIG. 2A.

The UE receiving the network coded data packet NC1 may determine, by using network decoding, data packet P3 from network coded data packet NC1 using the correctly received data packets P1 and P2 received from the source eNB over the first communications path.

The UE 2, using processor system 20, may transmit information to the target eNB indicative of further network coded data packets NC(i) required to network decode the network coded data packet NC1. The processor system 20 of the UE 2 is configured for determining a number i of network coded data packets required for network decode the at least one network coded data packet NC1 and providing an indication associated with the determined number. The UE 2A is configured for transmitting the indication to the telecommunications network 1, preferably to the target eNB. In the example of FIG. 3B, i=0 since the single network coded data packet NC1 was sufficient to obtain all data packets P1, P2 and P3 and no further network coded data packets were required.

FIG. 3C is a more elaborate time diagram in accordance with the method and system disclosed herein.

Again it is assumed that data packets P1, P2 and P3 have been transmitted onto a first communications path from the source eNB to the UE. P1 and P2 have been received correctly; P3 is not. The source eNB is not aware of the receipt status of P1, P2 and P3. A handover of the UE 2 from the source eNB to the target eNB is performed. Meanwhile, the source eNB has also received data packet P4 (e.g. from the S-GW), to be delivered at the UE 2. Data packet P4 has not been transmitted onto the first communications path to the UE. A network coded data packet NC1 may be obtained at the source eNB that is a linear combination not only of (already transmitted) data packets P1, P2 and P3, but also of (not yet transmitted) data packet P4. This may be controlled by controller 12A. The network coded data packet NC1 is transmitted onto the second communications path to the target eNB and the target eNB forwards NC1 to the UE. The UE cannot resolve, by applying network decoding and using the correctly received data packets P1 and P2, two unknown data packets P3, P4 from a single network coded data packet NC1. Therefore, the UE transmits an indication IND(1) to the target eNB that one (1) further network coded data packet is required to network decode network coded packet NC1. This information is forwarded by the target eNB to the source eNB and the source eNB obtains or has obtained a further, different, linear combination of the data packets P1, P2, P3, P4 yielding network coded data packet NC2. The combination may be different by using different coefficients. The source eNB transmits NC2 to the target eNB and the target eNB forwards NC2 to the UE. The UE can now resolve the two previously unknown data packets P3 and P4 from the network coded data packets NC1, NC2, by applying network decoding and using the correctly received data packets P1 and P2.

Accordingly, an indication IND(0) is transmitted from the UE to the target eNB that no further (0) network coded data packets NC are required, which information is forwarded by the target eNB to the source eNB. On receiving an indication IND(0), the source eNB may now terminate the phase of network coding. If necessary conventional transmission of data packets (in non-network coded manner) from the source eNB to target eNB and from the target eNB to the UE may be resumed; not shown in Fig. 3C.

It should be appreciated that the time interval during which data packets are network coded and transmitted onto the second communication path may be determined by fulfilment of one or more conditions. The condition may comprise a handover state of the network node. Another condition may comprise the data packets involved. An example of the former condition is that data packets for a particular UE are network coded from the time the network node becomes involved (e.g. as a source eNB) in a handover procedure for that UE. An example of the latter condition is that data packets are network coded that have already been transmitted onto the first communications path and in particular those data packets for which the network node did not ascertain the correct reception (e.g. an acknowledgement of correct reception has not been received by the network node).

The coding coefficients can be chosen ahead of time and made available to source eNB as well as to the UE. In this case there is no overhead in signaling coefficients. The UE needs only be informed of the data packets that are involved in the network coding, e.g. using a data packet serial number as already commonly used in data packet-based wireless cellular technologies. For example, a similar serial number is used in the Packet Data Convergence Protocol (PDCP) of LTE (see Section 6.3.3 of 3GPP TS 36.323, 'E-UTRA: Packet Data Convergence Protocol (PDCP) specification').

In the proposed method, as described above, the source eNB waits for receiving an indication IND(i) from the target eNB before transmitting an additionally required network coded data packet representing an additional linear combination. This ensures that maximum efficiency on the second communications path (and on the path further to the UE) is achieved. However, this may bring some delay before all required network coded data packets are transmitted. An alternative to the proposed method is to have the source eNB transmit network coded data packets with different linear combinations of data packets in a stream, e.g. at a predefined rate. Then the source eNB need not receive an indication IND(i) for individual additionally needed network coded packets, but it suffices that the source eNB receives only an indication that no additional network coded data packets are needed, e.g. an indication IND(0). The source eNB may then also terminate transmitting network coded data packets and possibly resume transmitting further data packets in a non-network coded manner.

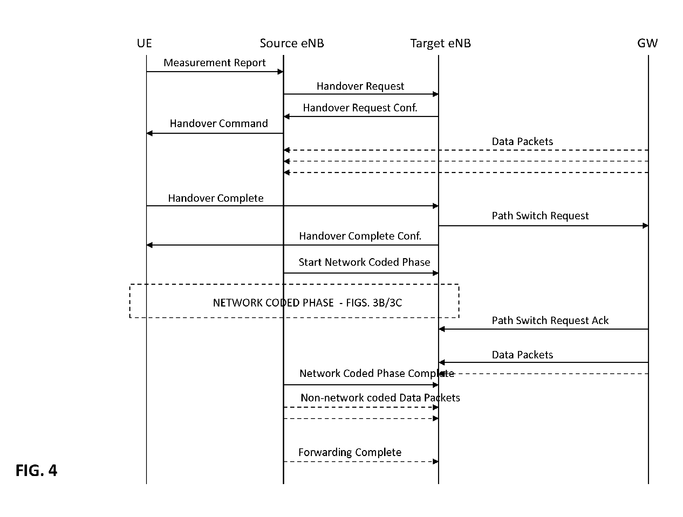

FIG. 4 is a time diagram illustrating how the disclosed method and system may be embedded in a handover procedure.

In a cellular wireless access telecommunications network, a UE typically transmits measurement reports to the base station (e.g. eNB) currently serving the UE, the reports indicating e.g. the signal strengths received by the UE from various, e.g. neighbour, base stations. From the measurement reports it may be determined, e.g. by the serving base station or by another entity in the telecommunications network, that a handover to a different base station should be performed. To that end, it transmits a handover request to a base station that, from the measurement report, is determined as a suitable new base station for performing services to the UE. This new base station is the target eNB. The serving base station is the source eNB and receives a handover request confirmation from the target eNB that it is available for a handover of the UE to the target eNB. Subsequently, the source eNB commands the UE to perform a handover to the target eNB. Data packet transmission between the source eNB and the UE is now interrupted, such that data packets are no longer transmitted to the UE and acknowledgements (ACKs) and/or negative acknowledgements (NACKs) and/or STATUS messages from the UE are not received at the source eNB. Also, additional data packets may arrive at the source eNB from a gateway GW, to be delivered at the UE (in Fig. 4 indicated with dotted arrows).

The UE transmits a handover complete signal to the target eNB when handover to the target eNB is completed and this is confirmed by the target eNB to the UE by a handover complete confirmation signal. Also, the target eNB requests the GW to switch the transmission path of the data packets to be delivered at the UE from the path GW to source eNB to the path GW to target eNB, using a path switch request. The path switch request is confirmed by a path switch request acknowledgement. After completion of the path switch, additional data packets arrive from the GW at the target eNB.

After having sent a handover command to the UE and having interrupted further communication with the UE, the source eNB forwards to the target eNB (e.g. via the X2 interface in LTE/LTE Advanced systems) all data packets to be delivered at the UE. These data packets may include (i) data packets that the source eNB already transmitted to the UE but for which the source eNB did not ascertain that the UE correctly received them (e.g. when using some form of acknowledged mode of transmission), (ii) data packets for the UE that the source eNB already received before the handover command and did not transmit to the UE and (iii) data packets for the UE that the source eNB received (and possibly may continue to receive, e.g. until the handover procedure approaches completion) after having sent the handover command. For these data packets, the coded phase as described with reference to FIGS. 3B and 3C improves transmission efficiency. At some point in time, the network coded phase may be completed and data packets still at the source eNB may be transmitted to the target eNB in a conventional non-network coded manner. The target eNB may eventually inform the source eNB to release all resources assigned to the UE.

Fig. 5 is a block diagram illustrating an exemplary data processing system that may be used as a part of a user equipment 2 or as a network node 10A, 10B, 10C, such as base station or data packet gateway.

Data processing system 50 may include at least one processor 51 coupled to memory elements 52 through a system bus 53. As such, the data processing system 50 may store program code within memory elements 52. Further, processor 51 may execute the program code accessed from memory elements 52 via system bus 53. In one aspect, data processing system 50 may be implemented as a computer that is suitable for storing and/or executing program code. It should be appreciated, however, that data processing system 50 may be implemented in the form of any system including a processor and memory that is capable of performing the functions described within this specification.

Memory elements 52 may include one or more physical memory devices such as, for example, local memory 54 and one or more bulk storage devices 55. Local memory may refer to random access memory or other non-persistent memory device(s) generally used during actual execution of the program code. A bulk storage device 55 may be implemented as a hard drive or other persistent data storage device. The data processing system 50 may also include one or more cache memories (not shown) that provide temporary storage of at least some program code in order to reduce the number of times program code must be retrieved from bulk storage device 55 during execution.

Input/output (I/O) devices depicted as input device 56 and output device 57 optionally can be coupled to the data processing system 50. Examples of input devices may include, but are not limited to, for example, a keyboard, a pointing device such as a mouse, a touch screen, or the like. Examples of output device may include, but are not limited to, for example, a monitor or display, speakers, or the like. Input device 56 and/or output device 57 may be coupled to data processing system 50 either directly or through intervening I/O controllers. A network adapter 58 may also be coupled to data processing system 50 to enable it to become coupled to other systems, computer systems, remote network devices, and/or remote storage devices through intervening private or public networks. The network adapter 58 may comprise a data receiver for receiving data that is transmitted by said systems, devices and/or networks to said data processing system 50 and a data transmitter for transmitting data to said systems, devices and/or networks. Modems, cable modems, and Ethernet cards are examples of different types of network adapters that may be used with data processing system 50.

As pictured in Fig. 5, memory elements 52 may store an application 59. It should be appreciated that data processing system 50 may further execute an operating system (not shown) that can facilitate execution of the application. Applications, being implemented in the form of executable program code, can be executed by data processing system 50, e.g., by processor 51. Responsive to executing the application 59, the data processing system 50 may be configured to perform one or more operation as disclosed in the present application in further detail.

In one aspect, for example, data processing system 50 may represent a user data processing system, e.g. a user equipment UE 2. In that case, application 29 may represent a user application that, when executed, configures data processing system 50 to perform the various functions described herein with reference to a user equipment. Examples of a user data processing system can include, but are not limited to, a personal computer, a portable computer, a mobile phone, or the like.

In another aspect, data processing system 50 may represent a network node as depicted schematically in FIG. 2A, in which case application 59, when executed, may configure data processing system 50 to perform operations as described in the present disclosure with reference to a network node.

It is noted that the method has been described in terms of steps to be performed, but it is not to be construed that the steps described must be performed in the exact order described and/or one after another. One skilled in the art may envision to change the order of the steps and/or to perform steps in parallel to achieve equivalent technical results.

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of the present invention has been presented for purposes of illustration and description, but is not intended to be exhaustive or limited to the invention in the form disclosed. Many modifications and variations will be apparent to those of ordinary skill in the art without departing from the scope and spirit of the invention. The embodiment was chosen and described in order to best explain the principles of the invention and the practical application, and to enable others of ordinary skill in the art to understand the invention for various embodiments with various modifications as are suited to the particular use contemplated.

Various embodiments of the invention may be implemented as a program product for use with a computer system or a processor, where the program(s) of the program product define functions of the embodiments (including the methods described herein). In one embodiment, the program(s) can be contained on a variety of non-transitory computer-readable storage media (generally referred to as "storage"), where, as used herein, the expression "non-transitory computer readable storage media" comprises all computer-readable media, with the sole exception being a transitory, propagating signal. In another embodiment, the program(s) can be contained on a variety of transitory computer-readable storage media. Illustrative computer-readable storage media include, but are not limited to: (i) non-writable storage media (e.g., read-only memory devices within a computer such as CD-ROM disks readable by a CD-ROM drive, ROM chips or any type of solid-state non-volatile semiconductor memory) on which information is permanently stored; and (ii) writable storage media (e.g., flash memory, floppy disks within a diskette drive or hard-disk drive or any type of solid-state random-access semiconductor memory) on which alterable information is stored.

## Claims

1. A method for data packet transmission from a network node of a telecommunications network comprising the steps of:
transmitting, from the network node, a plurality of data packets onto a first communications path of the telecommunications network, the plurality of data packets comprising a first data packet;
obtaining, at the network node, at least one network coded data packet, wherein the at least one network coded data packet is obtained from network coding of two or more data packets, wherein at least one data packet of the two or more data packets corresponds to the first data packet transmitted onto the first communications path; and
transmitting, from the network node, the obtained at least one network coded data packet onto a second communications path of the telecommunications network.

2. The method according to claim 1, wherein the two or more data packets from which the network coded data packet is obtained comprises a data packet not delivered over the first communications path to a receiving entity.

3. The method according to one or more of the preceding claims, wherein the network node is a base station, the method comprising the steps at the base station of:
transmitting the plurality of data packets from the base station onto a radio path of the telecommunications network for a user equipment;
receiving and/or transmitting a handover request for the user equipment;
transmitting the at least one network coded data packet onto the second communications path to a further base station.

4. The method according to claim 3, further comprising the step of transmitting the at least one network coded data packet onto the second communications path after having received and/or after having transmitted the handover request for the user equipment.

5. The method according to one or more of the preceding claims 3 or 4, wherein an indication indicative of correct reception of the first data packet by the user equipment, has not been received at the base station or an indication indicative of erroneous reception of the first data packet by the user equipment has been received at the base station.

6. The method according to one or more of the preceding claims, wherein the two or more data packets from which the network coded data packet is obtained comprises data packets of at least one of the following categories:
- one or more, or preferably all, data packets for which the network node did not ascertain correct reception by a receiving entity;
- one or more, or preferably all, data packets corresponding to data packets for which an indication of erroneous reception has been received;
- one or more data packets not yet transmitted onto the first communications path; and
- one or more data packets for which the network node received, preferably recently, an indication of correct reception at the receiving entity.

7. The method according to one or more of the preceding claims, further comprising the steps of:
transmitting a first network coded data packet onto the second communications path;
receiving an indication for transmitting at least a second network coded data packet,
wherein the indication is, optionally, received on the second communications path; and
transmitting a second network coded data packet onto the second communications path in response to receiving the indication.

8. The method according to claim 7, wherein the indication indicates a number of network coded data packets to be transmitted from the network node onto the second communications path.

9. The method according to one or more of the preceding claims 1-6, further comprising the step of transmitting one or more network coded data packets onto the second communications path until an indication to stop transmitting network coded data packets is received.

10. The method according to one or more of the preceding claims, further comprising the steps of:
terminating transmitting network coded data packets onto the second communications path; and
transmitting further data packets onto the second communications path in a non-network coded manner.

11. The method according to one or more of the preceding claims, further comprising the step of providing an indication of network coding coefficients to at least one of a user equipment and a node receiving the one or more network coded data packets prior to transmitting the obtained one or more network coded data packets onto the second communications path of the telecommunications network.

12. A computer program or suite of computer programs comprising at least one software code portion or a computer program product storing at least one software code portion, the software code portion, when run on a computer system, being configured for executing the method according to one or more of the claims 1-11.

13. A network node for packet transmission in a telecommunications network, comprising:
a first network interface configured for transmitting a plurality of data packets onto a first communications path of the telecommunications network, the plurality of data packets comprising at least a first data packet;
means for obtaining at least one network coded data packet, wherein the at least one network coded data packet is obtained from network coding of two or more data packets, wherein at least one data packet of the two or more data packets corresponds to the first data packet;
a second network interface configured for transmitting the at least one network coded data packet onto a second communications path of the telecommunications network; and
a controller configured for controlling obtaining the at least one network coded data packet and for transmitting the at least one network coded data packet onto the second communications path.

14. The network node according to claim 13, wherein the network node is further configured for performing the steps of one or more of the preceding claims 2-11.

15. A further network node configured for use in the method of one or more of the preceding claims 1-11, further comprising:
an interface configured for receiving the at least one network coded data packet on the second communications path;
an interface configured for transmitting the at least one network coded data packet to a user equipment.

16. A telecommunications network comprising the network node of claims 13 or 14 and the further network node of claim 15.

17. A user equipment for use in the telecommunications network of claim 16 comprising:
a receiving interface configured for receiving the plurality of data packets transmitted on the first communications path from the network node, the plurality of data packets comprising at least a first data packet and for receiving the at least one network coded data packet from the further network node;
a processor system configured for switching receiving the plurality of data packets over the receiving interface on the first communications path to subsequently receiving the at least one network coded data packet, wherein the processor system is further configured for network decoding the at least one network coded data packet received from the further network node, preferably using at least the first data packet received from the network node on the first communications path.

18. The user equipment according to claim 17, further comprising:
a processor system configured for determining a number of network coded data packets required for network decoding the at least one network coded data packet and providing an indication associated with the determined number;
a transmitting interface configured for transmitting the indication to the telecommunications network, preferably to the further network node.
